# EUROPEAN PATENT APPLICATION

(11) **EP 1 069 170 A1**
(43) Date of publication of application: **17.01.2001**
(21) Application number: 00114844.4
(22) Date of filing: 11.07.2000
(51) Int. Cl.: C09J 7/02, B32B 7/06

(54) **Release sheet**

(30) Priority: 16.07.1999 JP 20257199
(71) Applicant: TDK Corporation, Tokyo 103-8272 (JP)
(72) Inventor: Iijima, Tadayoshi, c/o TDK Corporation, Tokyo 103-8272 (JP)
(74) Representative: WILHELMS, KILIAN & PARTNER Patentanwälte

(57) **Abstract**

The present invention provides a release sheet which can be released very easily. In particular, the present invention provides a release sheet which can be released very easily even in the case where a functional film is arbitrarily cut by a user so as to be adapted to the shape of an adherend.

The release-initiating sheet (3) is superposed on one side of the release sheet main body (2) and bound partially to the one side of the release sheet main body. The binding part (4) is formed at plural sites by welding or fusion or via an adhesive or a self-adhesive, and formed in e.g. a continuous or discontinuous linear form. By grasping the edge (3a) of the release-initiating sheet, the release sheet can be easily released.

## Description

### BACKGROUND OF THE INVENTION

### Field of the Invention

The present invention relates to a release sheet capable of very easy release and a release sheet-provided functional film using the release sheet.

In a wide variety of functional sheets or films and the like having a self-adhesive layer (pressure sensitive adhesive layer) or an adhesive layer formed on a base, such as films for applying to window, various seals, protective films for printed matter etc., the release sheet is used for the purpose of protecting the self-adhesive layer or the adhesive layer in order to prevent the adhesive force of the self-adhesive layer or the adhesive layer from being reduced due to the adhesion of the layer to other materials or dusts before the sheets or films and the like are stuck on an adherend.

In the specification, the term "sheet" encompasses both sheet and film.

### Disclosure of the Related Art

In various functional films and the like having a self-adhesive layer or an adhesive layer formed on a base, such as sheets for applying to window, various seals, protective films for printed matter, the release sheet is stuck to the surface of the self-adhesive layer or the adhesive layer for the purpose of protecting the self-adhesive layer or the adhesive layer before the films and the like are stuck on an adherend. For sticking the functional film and the like to the adherend, the release sheet is removed from the functional film, and then the functional film and the like are stuck to the adherend.

To remove the release sheet from the functional film, the two in a stuck state are separated first at one edge, and then the release sheet and the functional film are pulled at the separated edge in an opposite direction to separate the two. To prevent inconveniences such as the transfer of the self-adhesive to the release sheet during this separation, a silicone coating is formed on the surface of the release sheet. In addition, the adhesion between the release sheet and the self-adhesive layer is also regulated by selecting the type of silicone, and/or regulating the amount of a hardening agent and/or the amount of silicone per unit area. Further, Japanese Laid-open Patent Publication No.5-77364(1993) discloses that a silicone-treated layer is provided on the surface of a release sheet base, and a fluorosilicone release layer is formed thereon. By this improvement, the separation of the release sheet from the functional film having the self-adhesive layer formed thereon is facilitated.

In the prior art, however, the functional film and the release sheet in a stuck state should be released first at one edge, as described above. The beginning of this release is difficult and thus it is necessary to rub the release sheet with nails or to insert a nail into between the functional sheet and the release sheet in order to initiate their release. This operation is uneasy and time-consuming, and may further cause damage to the essential functional film itself.

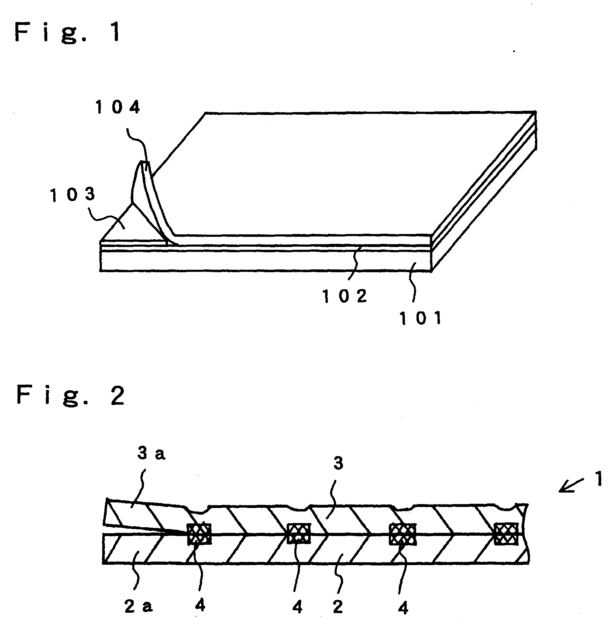

It is proposed that as shown in Fig. 1, a film or small paper piece (103) is previously stuck on one edge of a self-adhesive layer (102) on a functional film (101), and a release sheet (104) in this part is used as the means of initiating the release. In this case, the release can be easily conducted, but since there is no adhesive force in the part where the small piece (103) is stuck, this part cannot be stuck to an adherend. Further, when the functional film (101) is cut by a user so as to be adapted to the shape of the adherend, the reason for the small piece (103) to exist is lost unless the film is cut so as to contain the small piece (103). Because the intended adherend can have various shapes, it is not always possible to cut the functional film (101) so as to contain the small piece (103).

### SUMMARY OF THE INVENTION

Accordingly, the object of the present invention is to provide a release sheet capable of very easy release, thus solving the problems in the prior art described above. In particular, the object of the present invention is to provide a release sheet which can be released very easily even in the case where a functional film is cut arbitrarily by a user so as to be adapted to the shape of an adherend. Another object of the present invention is to provide a release sheet-provided functional film using said release sheet.

That is, the present invention is a release sheet comprising a release sheet main body and a release-initiating sheet superposed on one side of the release sheet main body and bound partially to the one side of the release sheet main body.

In the present invention, it is preferable that the part for binding the release sheet main body to the release-initiating sheet is formed at plural sites.

In the present invention, the part for binding the release sheet main body to the release-initiating sheet is formed, for example, a continuous or discontinuous linear form. Preferably, two or more linear binding parts are formed.

In the present invention, the part for binding the release sheet main body to the release-initiating sheet is formed, for example, in the form of discrete dots.

In the present invention, the release sheet main body and the release-initiating sheet are bound to each other, for example, by welding or fusion or by use of an adhesive or a self-adhesive (pressure sensitive adhesive).

In the present invention, the release-initiating sheet may also function as the release sheet main body. In this case, both external surfaces of the release sheet can be used for protection of self-adhesive layers on functional films.

In the present invention, the release sheet may comprise a first release sheet main body, a release-initiating sheet superposed on one side of the first release sheet main body and bound partially to the one side of the first release sheet main body, and a second release sheet main body superposed on top of a surface of the release-initiating sheet at the opposite side to the first release main body and bound partially to the release-initiating sheet. In this case, both external surfaces of the first release sheet main body and the second release sheet main body can be used for protection of self-adhesive layers on functional films.

Further, the present invention also relates to a release sheet-provided functional film, wherein the release sheet of the present invention described above is used.

According to the present invention, a release sheet capable of very easy release can be provided by binding a release-initiating sheet partially to one side of a release sheet main body. The release sheet of the present invention can be easily released particularly in the case where a functional film is arbitrarily cut by a user so as to be adjusted to the shape of an adherend.

### BRIEF DESCRIPTION OF THE DRAWINGS

Fig. 1 is a perspective view showing one example of the conventional release sheet-provided film.
Fig. 2 is a sectional view showing one example of the release sheet of the present invention.
Fig. 3 is a plan view showing a pattern of the binding part in the release sheet of the present invention.
Fig. 4 is a drawing for showing an advantage of the release sheet of the present invention upon release from a functional film.
Fig. 5 is a drawing for showing a further advantage of the release sheet of the present invention.
Fig. 6 is a fragmentary plan view showing a modified pattern of the binding part in the release sheet of the present invention.
Fig. 7 is a sectional view showing an example of one modification of the release sheet of the present invention.

### DETAILED DESCRIPTION OF THE INVENTION

Hereinafter, the embodiments of the present invention are described with reference to the drawings.

Fig. 2 is a sectional view showing one example of the release sheet of the present invention. In the release sheet (1) in Fig. 2, the release-initiating sheet (3) is superposed on one side of the release sheet main body (2), and the release sheet main body (2) and the release-initiating sheet (3) are bound partially in area thereof to each other.

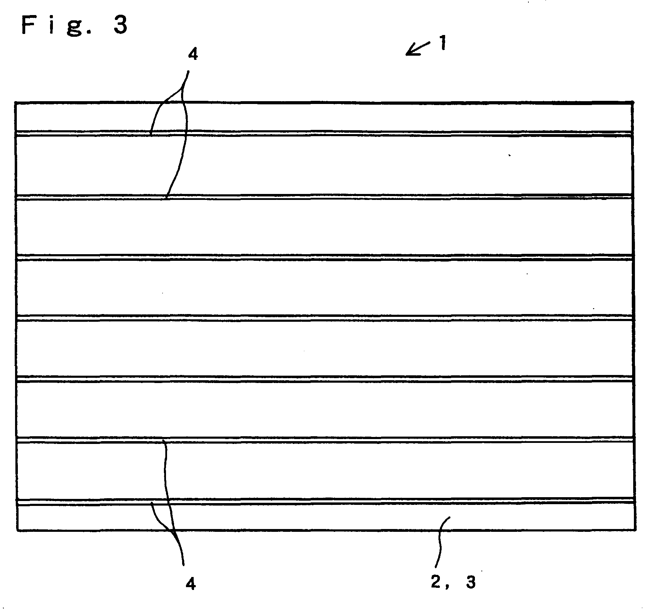

The binding parts (4) are formed in plural places on sheets (2) and (3). There can be various plane shapes and arrangement patterns of the binding part (4), and in this example, a plurality of continuous linear binding parts (4) are formed at almost equal intervals, as shown in the plan view of the release sheet in Fig. 3.

In parts other than the binding parts (4), the release sheet main body (2) is merely in contact with, and not bound to, the release-initiating sheet (3). Accordingly, the edge (2a) of the release sheet main body can be easily released from the edge (3a) of the release-initiating sheet at the edge (e.g., the left edge in Fig. 2) of the release sheet (1).

The release sheet main body and/or the release-initiating sheet may be composed of any known materials used in the conventional release sheets. Examples include various synthetic resin films such as polyethylene film, polypropylene film, polyester films including PET, as well as various papers such as plain paper, glassine paper and polyethylene-laminated paper. Further, the surface of the release sheet to be brought into contact with the self-adhesive layer on the intended functional film is preferably provided with a silicon coating or a fluororesin coating. In the polyethylene film, the amount of a lubricant may be regulated to regulate the adhesion thereof to the self-adhesive layer. As used herein, the term "sheet" is intended to encompass both sheets and films.

Further, the release sheet main body and/or the release-initiating sheet may be either flexible or rigid.

The binding of the release sheet main body to the release-initiating sheet can be easily conducted, for example, by welding or fusion, or by use of an adhesive or a self-adhesive. Techniques used for this binding may be determined suitably depending on the materials of the release sheet main body and the release-initiating sheet.

For example, if the two are thermoplastic resin films, their binding may be conducted by a binding method of heat melting, a binding method of sonication melting, or a binding method of solvent melting or a binding method of using an adhesive or a self-adhesive, etc. If two or one of the two is a paper for which welding or fusion is unsuitable, then their binding may be conducted by means of a suitable adhesive or self-adhesive.

To obtain the release sheet-provided functional film, the release sheet main body is bound to the release-initiating sheet to prepare a release sheet, and then the release sheet may be provided on a self-adhesive layer or an adhesive layer on a functional film. Alternatively, the release sheet main body is provided on a self-adhesive layer or an adhesive layer on a functional film, and then the release sheet main body may be bound to the release-initiating sheet.

In the latter case, an adhesive or a self-adhesive is preferably used for binding so that the functional film is prevented from being damaged upon binding of the release sheet main body to the release-initiating sheet. More preferably, the adhesive or self-adhesive is first formed on the release-initiating sheet, and then this release-initiating sheet is attached and bound to the release sheet main body.

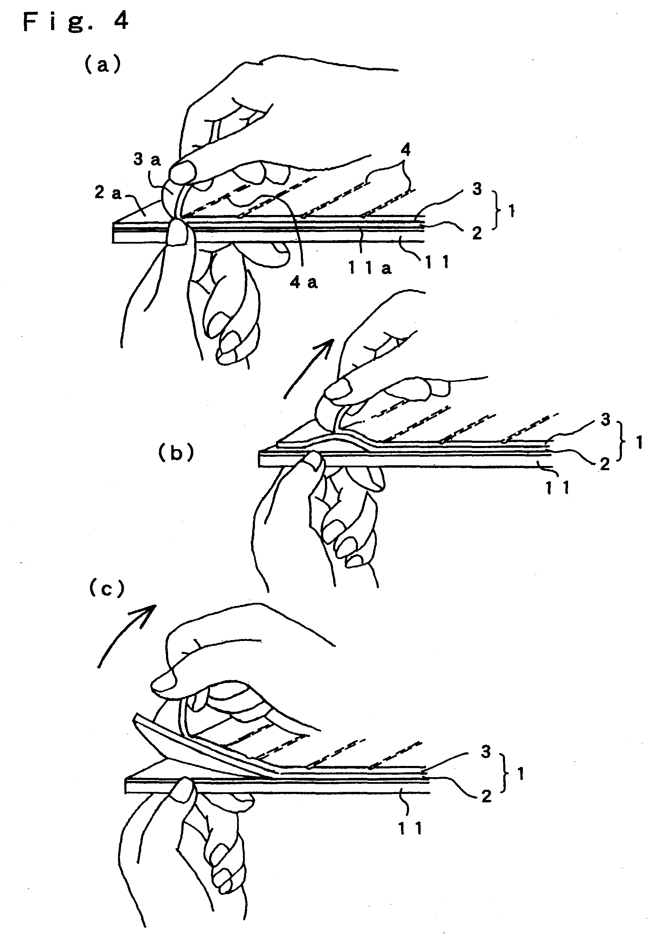

Now, the advantage of the release sheet of the present invention upon release from the functional film is described with reference to Fig. 4.

In Fig. 4, the release sheet main body (2) of the release sheet (1) is stuck on the self-adhesive layer (11a) to protect the self-adhesive layer (11a) of the functional film (11). In this release sheet (1), a plurality of continuous linear binding parts (4) are formed at almost equal intervals as shown in Fig. 3, via which the release sheet main body (2) and the release-initiating sheet (3) are partially bound to each other.

To remove the release sheet (1), the edge (3a) where the release-initiating sheet (3) is not bound is grasped by one hand, as shown in (a). In this portion, the edge (2a) of the release sheet main body is merely in contact with the edge (3a) of the release-initiating sheet, and thus the two can be easily separated, and the edge (3a) can be grasped. The thumb in the other hand is put in the vicinity of the cut area where the binding line (4a) in contact with the edge (3a), and the cut area of the functional film (11) and the release sheet (1) intersect. Then, as shown in (b), the edge (3a) of the release-initiating sheet is pulled vertically upwards from the surface of the functional film (11) such that it is made apart from said cut area. By doing so, a stress is applied to the binding line (4a) and said cut area or therearound, whereby the release sheet (1) is easily removed (c).

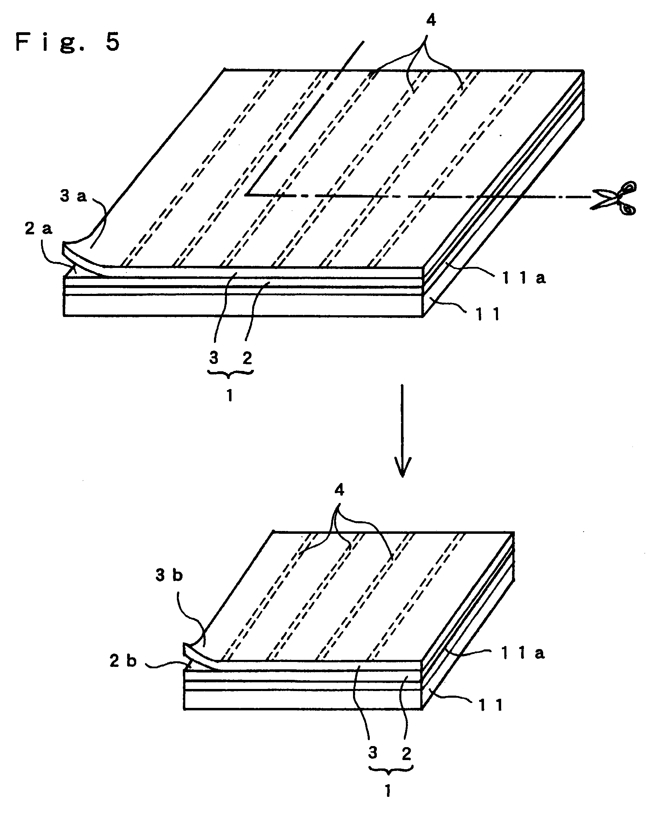

The further advantage of the release sheet of the present invention is described with reference to Fig. 5. When the functional film (11) using the release sheet (1) of the present invention is cut by the user into an arbitrary shape in conformity with the shape of an adherend, there must always appear an edge (2b) of the release sheet main body and an edge (3b) of the release-initiating sheet which are not bound to each other (in the drawing, there are also edges besides (2b) and (3b)) in place of the initially present edges, that is, the edge (2a) of the release sheet main body and the edge (3a) of the release-initiating sheet. Accordingly, the release sheet (1) can be removed easily by grasping the edge (3b) in the same manner as for the functional film before cutting. That is, the release sheet of the present invention can be easily removed even after the functional film is cut into an arbitrary shape. Heretofore, there was no release sheet having such a very convenient release-initiating function.

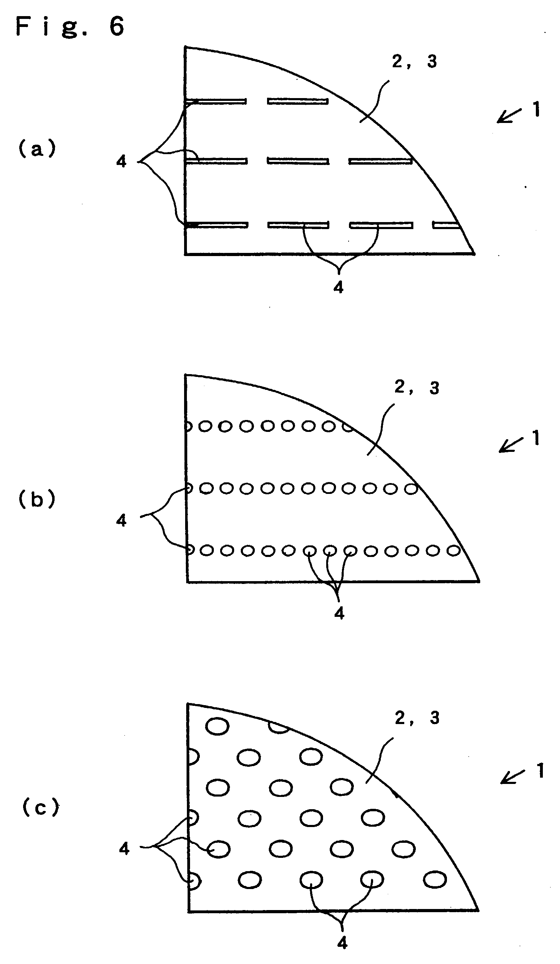

The binding part in the release sheet of the present invention can have various plane shapes and arrangement patterns besides those shown in Fig. 3. Figs. 6 (a), (b) and (c) show a fragmentary plan view of a modified pattern of the binding part in the release sheet, respectively. In Fig. 6 (a), the binding part (4) is formed in a discontinuous linear form. In Fig. 6 (b), the binding part (4) is formed as circular or elliptical dots in a linear form. In Fig. 6 (c), the binding part (4) is arranged as circular or elliptical dots in a staggered or check-striped form. As is evident from the release sheet having any of patterns (a), (b) and (c) of the binding part, the advantages shown with reference to Figs. 4 and 5 can be achieved. As a matter of course, there can be a wide variety of modifications other than those described above.

In addition, the interval among the linear binding parts or the interval among the dotted binding parts arranged in a staggered or check-striped form may be determined in consideration of the approximate size of the intended functional film after cutting. If the film is cleaved into small pieces, the interval among the binding parts may be small, while if it is cleaved into large pieces, the interval may be large.

Further, the binding parts may be formed at either equal or unequal intervals. For example, if one functional film is to be cut into several sheets having a different size, the binding parts may be formed at large intervals where the film is cut into larger sheets and at small intervals where it is cut into smaller sheets.

In the present invention, the release-initiating sheet may also function as the release sheet main body. In this case, both external surfaces of the release sheet can be used for protection of self-adhesive layers on functional films. That is, with reference to Fig. 2, self-adhesive layers of functional films can be stuck to the lower face of the release sheet main body (2) and the upper face of the release-initiating sheet (3), respectively. For example, when functional films of right and left symmetrical shape, such as window films in automobiles are required, functional films of right and left symmetrical shape can be obtained in duplicate by one operation if functional films are previously stuck to both external surfaces of the release sheet of this type. In this case, the functional films should be flexible at some degrees. The operation of releasing the release sheet from the functional films is easy.

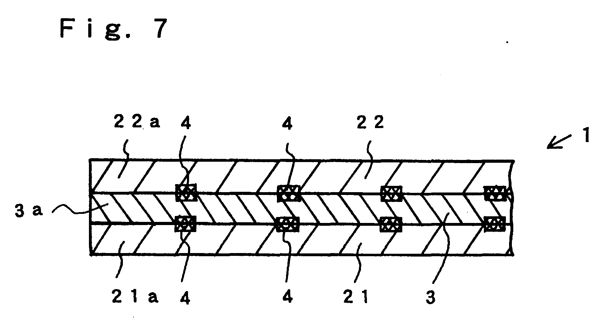

As another embodiment of the release sheet of the present invention, there can be the one shown in Fig. 7. In this release sheet (1), the first release sheet main body (21) is superposed on one side of the release-initiating sheet (3), and the first release sheet main body (21) and the release-initiating sheet (3) are bound partially in area thereof to each other. In addition, the second release sheet main body (22) is superposed on the other side of the release-initiating sheet (3), and the second release sheet main body (22) and the release-initiating sheet (3) are bound partially in area thereof to each other. A plurality of binding parts (4) may be formed in a continuous linear form.

In the parts other than the binding parts (4), the first and second release sheet main bodies (21) and (22) are merely in contact with, and not bound to, the release-initiating sheet (3). Accordingly, the edges (21a) and (22a) of the first and second release sheet main bodies can be easily separated from the edge (3a) of the release-initiating sheet at the edge of the release sheet (1) (for example, the left edge in Fig. 7). In this release sheet (1), a self-adhesive layer of a functional film can be stuck to each of the lower face of the first release sheet main body (21) and the upper face of the second release sheet main body (22), and the operation of releasing the release sheet from the functional films is easy.

The release sheet of the present invention can be applied to functional films in various fields. For example, the release sheet can be applied to coloring sheets for windows in automobiles, insecticidal sheets for glass windows, ordinary seals, sheets for protecting images by reducing ultraviolet rays, and self-adhesive tapes. As a matter of course, the release sheet of the present invention is not limited to these examples. Further, it is evident that the release sheet of the present invention is not only applicable to functional films but also usable as a protective sheet capable of easy release. For example, it can be used as a protective sheet for a top of a desk during transportation.

### EXAMPLES

Hereinafter, the present invention is described with reference to the Examples, which however are not intended to limit the present invention.

### [Example 1]

### (Formation of a release sheet)

Two low-density polyethylene films, each having a width of 320 mm and a thickness of 30 µm, were laid one on the other and bound to each other with a heat sealer. The binding part was in a linear form in the width direction of the polyethylene film, and the width of the linear binding part was 1 mm. This binding operation was conducted repeatedly, whereby parallel binding lines were formed one after another at 30 mm intervals. The release sheet was thus formed.

### (Formation of a self-adhesive layer on a base film)

Four parts by weight of a cross-linking agent B-45 (Ipposha Yushi Kogyo Co. Ltd., Japan), 50 parts by weight of methyl ethyl ketone (MEK) and 50 parts of toluene were added to and mixed with 100 parts by weight of Bainzoru U-250™ (Ipposha Yushi Kogyo Co. Ltd.), to prepare an self-adhesive solution.

This self-adhesive solution was applied on a PET film of 320 mm in width and 100 µm in thickness as a base, dried with hot air at 120 °C and cured to form a self-adhesive layer. The thickness of this self-adhesive layer was 10 µm.

### (Laminating between the base and the release sheet)

The release sheet and the base obtained above were sent by two rubber rolls such that the release sheet and the self-adhesive layer were contacted with each other between the rubber rolls, whereby the release sheet was laminated on the base.

The sheet thus obtained was cut in the longitudinal direction at a part apart by 10 mm from each of both ends in the width direction thereof, to give a sheet with a width of 300 mm, and then this sheet was cut at 210 mm intervals in the longitudinal direction, to give a release sheet-provided self-adhesive sheet (A) of 300 mm × 210 mm. That is, the pattern of the binding part in this release sheet-provided self-adhesive sheet (A) was as shown in Fig. 3.

### (Releasability of the release sheet)

As shown in Fig. 4, the edge (3a) of the release-initiating sheet was grasped by one hand, and the thumb in the other hand was put on the cut area of the sheet in the vicinity of the edge (3a), and the edge (3a) of the release-initiating sheet was pulled vertically upwards so that it was made apart from the cut area. The release sheet (1) could be easily released from the base.

### (Releasability of a cut part of the sheet)

A rectangular sheet with a size of 100 mm × 50 mm was cut off by a cutter from an almost central part of the release sheet-provided self-adhesive sheet (A). The edge of the release-initiating sheet could be easily grasped at the edge of the sheet. The release sheet could be released easily from the base in the same manner as above.

### [Example 2]

The release sheet was prepared in the following manner.

A PET film of 320 mm in width and 25 µm in thickness having a silicone coating on one side thereof was used as the release sheet main body, and a PET film of 320 mm in width and 25 µm in thickness was used as the release-initiating sheet.

The two PET films were laid one on the other and fusion-bonded to each other via a heat sealer such that the silicone coating faced outside. The release sheet having the same binding pattern as in Example 1 was prepared.

The base was laminated on the release sheet (so as to bring the self-adhesive layer into contact with the silicone coating) in the same manner as in Example 1 except that the amount of the cross-linking agent in the self-adhesive solution was changed to 2 parts by weight, whereby a release sheet-provided self-adhesive sheet (B) was obtained. When the releasability of the release sheet was confirmed, the release sheet could be easily released from the base. In addition, when the releasability of a partial sheet cut from the sheet (B) was confirmed in the same manner as in Example 1, the release sheet could be easily released from the base.

### [Example 3]

In this example, a release paper of 320 mm in width having one side thereof treated with silicone was used as the release sheet main body, and a plain paper of 320 mm in width was used as the release-initiating sheet.

A cardboard having linear slits of 2 mm in width formed at 30 mm intervals therein was prepared.

This cardboard having slits therein were placed on the back of the silicone-treated release paper, and a paste was applied downwards via the slits to form linear paste films on the release paper. The plain paper was placed on the face formed the paste films thereon, and the silicone-treated release paper and the plain paper were adhesive-bonded to each other to prepare a release sheet.

Then, the base was laminated on the release sheet in the same manner as in Example 1, whereby a release sheet-provided self-adhesive sheet (C) was obtained. When the releasability of the release sheet was confirmed, the release sheet could be easily released from the base. In addition, when the releasability of a partial sheet cut from the sheet (C) was confirmed in the same manner as in Example 1, the release sheet could be easily released from the base.

### [Comparative Example 1]

One sheet of low-density polyethylene used in Example 1 was used as the release sheet. The base was laminated on the release sheet in the same manner as in Example 1, whereby a release sheet-provided self-adhesive sheet (D) was obtained. It was difficult to initiate release of the release sheet, and the release sheet could not be released satisfactorily from the base.

### [Comparative Example 2]

One silicone-treated PET film used in Example 2 was used as the release sheet. The base was laminated on the release sheet in the same manner as in Example 2, whereby a release sheet-provided self-adhesive sheet (E) was obtained. It was difficult to initiate release of the release sheet, and the release sheet could not be released satisfactorily from the base.

### [Comparative Example 3]

One silicone-treated release paper used in Example 3 was used as the release sheet. The base was laminated on the release sheet in the same manner as in Example 3, whereby a release sheet-provided self-adhesive sheet (F) was obtained. It was difficult to initiate release of the release sheet, and the release paper could not be released satisfactorily from the base.

### [Comparative Example 4]

In Comparative Example 2, a self-adhesive layer was formed on the base film, and then a right-angled isosceles triangle-shaped paper wherein the length of each of two sides at a right angle was 20 mm was attached to the self-adhesive layer. Thereafter, a release sheet (silicone-treated PET film) was laminated on the adhesive layer. The resulting sheet was cut so as to have the right-angled triangle-shaped paper at the edge thereof, whereby a release sheet-provided self-adhesive sheet (G) as shown in Fig. 1 was obtained.

When the releasability of this release sheet was confirmed, the release sheet could be easily released from the base. However, a sheet cut off from the center of the sheet (G) no longer had the triangle-shaped paper, and accordingly, it was difficult to initiate release of the release sheet, and the release sheet could not be released satisfactorily from the base.

### [Example 4: Modification of the process for producing the release sheet]

In this example, similar to Example 3, a release paper of 320 mm in width having one side thereof treated with silicone was used as the release sheet main body, and a plain paper of 320 mm in width was used as the release-initiating sheet.

A self-adhesive layer was formed on a base PET film in the same manner as in Example 3. Then, one silicone-treated release paper was first laminated on the base such that the silicone-treated face was brought into contact with the self-adhesive layer.

A cardboard having linear slits of 2 mm in width formed at 30 mm intervals therein was prepared.

This cardboard having slits therein were placed on the plain paper, and a paste was applied downwards via the slits onto the plain paper to form linear paste films thereon. The plain paper was stuck by a laminator to the release paper such that the face formed the paste films thereon was brought into contact with the face of the release paper having the PET film laminated thereon. The sheet thus obtained was cut in the longitudinal direction at a part apart by 10 mm from each of both ends in the width direction thereof, to give a sheet with a width of 300 mm, and then this sheet was cut at 210 mm intervals in the longitudinal direction, to give a release sheet-provided self-adhesive sheet (H) of 300 mm × 210 mm. When the releasability of the release sheet was confirmed, the release sheet could be easily released from the base. In addition, when the releasability of a partial sheet cut from the sheet (H) was confirmed in the same manner as in Example 1, the release sheet could be easily released from the base.

The present invention can be carried out in any various modes without departure from the sprit or major features of the present invention. Accordingly, the Examples described above are merely shown for illustrative purposes and not construed as restrictive. Further, any changes within the equivalence of the claims are within the scope of the present invention.

## Claims

1. A release sheet comprising a release sheet main body and a release-initiating sheet superposed on one side of the release sheet main body and bound partially to the one side of the release sheet main body.

2. The release sheet according to claim 1, wherein the part for binding the release sheet main body to the release-initiating sheet is formed at plural sites.

3. The release sheet according to claim 1, wherein the part for binding the release sheet main body to the release-initiating sheet is formed in a continuous or discontinuous linear form.

4. The release sheet according to claim 3, wherein two or more linear binding parts are formed.

5. The release sheet according to claim 1, wherein the part for binding the release sheet main body to the release-initiating sheet is formed in the form of discrete dots.

6. The release sheet according to claim 1, wherein the release sheet main body and the release-initiating sheet are bound to each other by welding or fusion.

7. The release sheet according to claim 1, wherein the release sheet main body and the release-initiating sheet are bound to each other by use of an adhesive or an self-adhesive.

8. The release sheet according to claim 1, wherein the release-initiating sheet also functions as the release sheet main body.

9. The release sheet according to claim 1, which comprises a first release sheet main body, a release-initiating sheet superposed on one side of the first release sheet main body and bound partially to the one side of the first release sheet main body, and a second release sheet main body superposed on a surface of the release-initiating sheet at the opposite side to the first release main body and bound partially to the release-initiating sheet.

10. A release sheet-provided functional film, wherein the release sheet according to any one of claims 1 to 9 is used.
